# EUROPÄISCHE PATENTSCHRIFT

(11) **EP 3 520 349 B1**
(45) Veröffentlichungstag und Bekanntmachung des Hinweises auf die Patenterteilung: **05.08.2020**
(21) Anmeldenummer: 17761228.0
(22) Anmeldetag: 28.08.2017
(51) Int. Cl.: H04L 29/06, G06F 21/60, H04L 9/00

(54) **VERFAHREN ZUM MANIPULATIONSSICHEREN BEWERTEN VON KOMPONENTENEIGENSCHAFTEN EINES FELDGERÄTS**
METHOD FOR RELIABLE EVALUATION OF COMPONENT PROPERTIES OF A FIELD DEVICE
MÉTHODE D'ÉVALUATION FIABLE DE CHARACTÉRISTIQUES DE COMPOSANTS D'UN DISPOSITIF DE CHAMP

(30) Priorität: 30.09.2016 DE 102016118615
(43) Veröffentlichungstag der Anmeldung: 07.08.2019
(73) Patentinhaber: Endress+Hauser Process Solutions AG, 4153 Reinach (CH)
(72) Erfinder: MANEVAL, Michael, 79650 Schopfheim (DE); MAYER, Michael, 4104 Oberwil (CH); SOTRIFFER, Ingomar, 79194 Gundelfingen (DE)
(74) Vertreter: Andres, Angelika Maria
(86) Internationale Anmeldenummer: PCT/EP2017/071538
(87) Internationale Veröffentlichungsnummer: WO 2018/059851

(56) Entgegenhaltungen:
- WO-A1-2011/154212
- US-A1- 2008 084 294
- US-A1- 2016 170 996

## Beschreibung

Die Erfindung betrifft ein Verfahren zum manipulationssicheren Bewerten von zumindest einer Komponenteneigenschaft zumindest eines Feldgeräts in einer Anlage der Automatisierungstechnik.

Aus dem Stand der Technik sind bereits Feldgeräte bekannt geworden, die in industriellen Anlagen zum Einsatz kommen. In der Prozessautomatisierungstechnik ebenso wie in der Fertigungsautomatisierungstechnik werden vielfach Feldgeräte eingesetzt. Als Feldgeräte werden im Prinzip alle Geräte bezeichnet, die prozessnah eingesetzt werden und die prozessrelevante Informationen liefern oder verarbeiten. So werden Feldgeräte zur Erfassung und/oder Beeinflussung von Prozessgrößen verwendet. Zur Erfassung von Prozessgrößen dienen Messgeräte, bzw. Sensoren. Diese werden beispielsweise zur Druck- und Temperaturmessung, Leitfähigkeitsmessung, Durchflussmessung, pH-Messung, Füllstandmessung, etc. verwendet und erfassen die entsprechenden Prozessvariablen Druck, Temperatur, Leitfähigkeit, pH-Wert, Füllstand, Durchfluss etc. Zur Beeinflussung von Prozessgrößen werden Aktoren verwendet. Diese sind beispielsweise Pumpen oder Ventile, die den Durchfluss einer Flüssigkeit in einem Rohr oder den Füllstand in einem Behälter beeinflussen können. Neben den zuvor genannten Messgeräten und Aktoren werden unter Feldgeräten auch Remote I/Os, Funkadapter bzw. allgemein Geräte verstanden, die auf der Feldebene angeordnet sind.

Eine Vielzahl solcher Feldgeräte wird von der Endress+Hauser-Gruppe produziert und vertrieben.

In modernen Industrieanlagen sind Feldgeräte in der Regel über Kommunikationsnetzwerke wie beispielsweise Feldbusse (Profibus®, Foundation® Fieldbus, HART®, etc.) mit übergeordneten Einheiten verbunden. Normalerweise handelt es sich bei den übergeordneten Einheiten um Steuereinheiten, wie beispielsweise eine SPS (speicherprogrammierbare Steuerung) oder einen PLC (Programmable Logic Controller). Die übergeordneten Einheiten dienen unter anderem zur Prozesssteuerung, sowie zur Inbetriebnahme der Feldgeräte. Die von den Feldgeräten, insbesondere von Sensoren, erfassten Messwerte werden über das jeweilige Bussystem an eine (oder gegebenenfalls mehrere) übergeordnete Einheit(en) übermittelt, die die Messwerte gegebenenfalls weiterverarbeiten und an den Leitstand der Anlage weiterleiten. Der Leitstand dient zur Prozessvisualisierung, Prozessüberwachung und Prozessteuerung über die übergeordneten Einheiten. Daneben ist auch eine Datenübertragung von der übergeordneten Einheit über das Bussystem an die Feldgeräte erforderlich, insbesondere zur Konfiguration und Parametrierung von Feldgeräten sowie zur Ansteuerung von Aktoren.

Feldgeräte, bzw. Komponenten von Feldgeräten, müssen im Einsatz je nach Applikation verschiedensten Anforderungen genügen. Abhängig von der jeweiligen Applikation müssen die Komponenten beispielsweise EMV-, SIL-, und/oder Ex-Sicherheit-Eigenschaften aufweisen.

In der Praxis werden diese Anforderungen durch Tests in Laboren zertifiziert. Hierbei werden historische Erfahrungswerte für eine Komponenteneigenschaft als Norm angesetzt. Genügt die Komponenteneigenschaft des Feldgeräts dieser Norm, so wird das Feldgerät entsprechend zertifiziert. Weitere Komponenteneigenschaften sind beispielsweise, ob das Gerät geeicht ist, ob das Gerät kalibriert ist, Wasserdichtigkeit und/oder Chemiebeständigkeit.

Nachteilig an diesem Vorgehen ist, dass für besagte Tests häufig geeignete Infrastrukturen, beispielsweise Prüflabore, benötigt werden, was mit einem hohen Aufwand verbunden ist. Die Tests bescheinigen das Zutreffen einer Komponenteneigenschaft unter Laborbedingungen, reale Umgebungsbedingen sind unter Umständen nur unzureichend abgebildet. Kunden, also potentielle Käufer der Feldgeräte, vertrauen häufig auf die sogenannte Betriebsbewährung. Das bedeutet, dass Komponenteneigenschaften in der eigenen Applikation der Anlage des Kunden unter den dort herrschenden Umgebungsbedingungen als zutreffend empfunden wurden, was von den Tests durch Prüflabore nicht abgebildet werden kann. Des Weiteren werden Zertifikate häufig nur regional und von einer einzigen Teststelle vergeben. Einheitliche, globale Zertifikate sind bislang nur selten etabliert.

Die US 2008/084294 A1 offenbart ein Verfahren zum manipulationssicheren Bewerten von Feldgeräten, wobei jedes Feldgerät eine Datenbank mit Parametern bezüglich benachbarter Feldgeräten enthält. Ein 'judge'-Feldgerät ermittelt, basierend auf Bewertungen mehrerer anderen benachbarten 'jury'- Feldgeräte, das Sicherheitsniveau eines benachbarten Feldgeräts.

Die WO 2011/154212 A1 offenbart ein Verfahren zur Inbetriebnahme, zum Warten und/oder Bedienen von Feldgeräten, wobei für Feldgeräte oder Komponenten von Feldgeräten ein universell geltender eindeutiger Identifizierungscode über einen Standard-Algorithmus dezentral erzeugt wird, unter welchem während des Lebenszyklus der einzelnen Feldgeräte entstandene Information gespeichert und bereitstellbar ist.

Die US 2016/170996 A1 offenbart Systeme und Verfahren zum Erzeugen massenbasierter Ergebnisse basierend auf Messungen der affektiven Reaktion von Benutzern. Beispielsweise werden Sensoren verwendet, um Messungen der affektiven Reaktion mehreren Benutzern mit einer bestimmten Erfahrung durchzuführen. Die Messungen können verschiedene Werte beinhalten, die auf physiologische Signale und/oder Verhaltensmuster der Benutzer hinweisen. Einige Beispiele für die hierin erwähnten Erfahrungen betreffen Urlaubserlebnisse, Essen in Restaurants und die Verwendung verschiedener Produkte.

Ausgehend von dieser Problematik liegt der Erfindung liegt die Aufgabe zugrunde, ein Verfahren vorzustellen, welches Bewertungen von Komponenteneigenschaften im realen Einsatz eines Feldgeräts auf (manipulations)sichere Art und Weise erlaubt.

Die Aufgabe wird gelöst durch ein Verfahren nach Anspruch 1.

Vorteilhafte Weiterbildungen sind in den abhängigen Ansprüchen definiert.

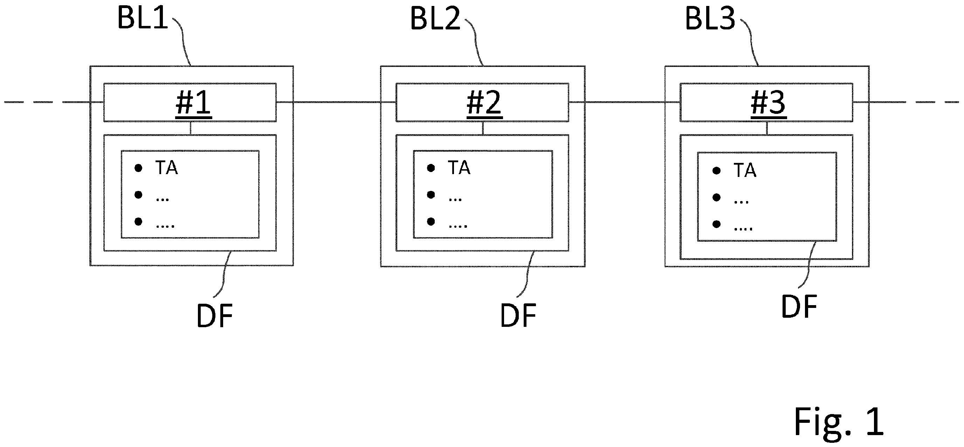

Die Erfindung wird anhand der nachfolgenden Figuren näher erläutert. Es zeigen
Fig. 1: eine Erläuterung von Datenblöcken, welche im erfindungsgemäßen Verfahren zum Einsatz kommen; und
Fig: 2: ein Ausführungsbeispiel des erfindungsgemäßen Verfahrens.

Fig. 1 zeigt eine Erläuterung von Datenblöcken BL1, BL2, BL3, welche entsprechend der Blockchain-Technologie ausgestaltet sind. Die Blockchain-Technologie wurde als Backbone der Internet-Währung "Bitcoin" bekannt. Eine Blockchain, also eine Kette verknüpfter Datenblöcke BL1, BL2, BL3 erlaubt eine hohe Datenintegrität. Im Folgenden sei die Funktionsweise einer Blockchain, ausgestaltet für das erfindungsgemäße Verfahren, kurz erläutert.

Ein besagter Datenblock BL1, BL2, BL3 besteht in der Regel aus zumindest zwei Komponenten: Zum einem ist das ein Datenfeld DF. In diesem Datenfeld DF sind Daten in Form von Transaktionen TA gespeichert. Als Transaktion TA wird eine Übermittlung der Daten von einem ersten Teilnehmerknoten TK zu einem zweiten Teilnehmerknoten TK in einem Kommunikationsnetzwerk KN bezeichnet. Eine Transaktion TA enthält einen übermittelten Wert, in diesem Fall also Daten, sowie den Sender und den Empfänger der Transaktion TA. Als Teilnehmerknoten TK werden alle Geräte bezeichnet, welche die Blockchain-Technologie in dem Kommunikationsnetzwerk KN nutzen.

Ein Datenfeld DF eines Datenblocks BL1, BL2, BL3 enthält zumindest eine Transaktion TA, häufiger mehrere Transaktionen TA.

Zum anderen enthält ein Datenblock BL1, BL2, BL3 eine Prüfsumme #1, #2, #3. Eine solche Prüfsumme #1, #2, #3 ist ein Hashwert und wird durch mitunter aufwendige Berechnungen erstellt. Hierfür werden alle Transaktionen TA des Datenfelds eines Blocks BL1, BL2, BL3 zu einem Zwischenwert berechnet. Hierfür wird beispielsweise die Merkle-Root der Gesamtzahl der Transaktionen TA berechnet. Auf das genaue Funktionsprinzip wird an dieser Stelle nicht eingegangen. Es sei hierfür beispielsweise auf https://en.wikipedia.org/wiki/Merkle_tree verwiesen.

Dieser errechnete Zwischenwert wird anschließend mit der Prüfsumme #1, #2, #3 des vorherigen Datenblocks BL1, BL2, BL3 zur Prüfsumme #1, #2, #3 des aktuellen Datenblocks BL1, BL2, BL3 verrechnet. Beispielsweise enthält der in Fig. 1 gezeigte Datenblock BL2 eine Prüfsumme #2. Diese Prüfsumme #2 wurde also aus den in dem Datenfeld DF des Datenblocks B2 gespeicherten Transaktionen TA und der Prüfsumme #1 des vorangehenden Datenblocks BL1 berechnet. Analog dazu enthält der in Fig. 1 gezeigte Datenblock BL3 eine Prüfsumme #3. Diese Prüfsumme #3 wurde also aus den in dem Datenfeld DF des Datenblocks B3 gespeicherten Transaktionen TA und der Prüfsumme #2 des vorangehenden Datenblocks BL2 berechnet.

Die Integrität der Daten, also die Sicherung der Daten gegen nachträgliche Manipulationen, ist somit durch die Speicherung der Prüfsumme #1, #2, #3 des vorangehenden Datenblocks BL1, BL2 im jeweils nachfolgenden Datenblock BL2, BL3 gesichert. Eine Blockchain besteht also aus einer Reihe von Datenblöcken BL1, BL2, BL3, in denen jeweils eine oder mehrere Transaktionen TA zusammengefasst und mit der Prüfsumme #1, #2, #3 versehen sind. Eine Änderung von Daten erzeugt einen geänderten Zwischenwert, wodurch auch die Prüfsumme #1, #2, #3 des jeweiligen Datenblocks BL1, BL2, BL3 verändert wird. Der darauffolgende Datenblock BL1, BL2, BL3 passt somit nicht mehr zu dem vorangehenden Datenblock BL1, BL2, BL3. Daten eines einmal erfolgreich validierten Datenblocks BL1, BL2, BL3 sind dadurch für einen Angreifer nicht mehr veränderbar.

Neue Datenblöcke BL1, BL2, BL3 werden in regelmäßigen Zeitabständen erstellt. In das Datenfeld des neuen Datenblocks BL1, BL2, BL3 werden alle Transaktionen TA gespeichert, welche nach dem Zeitpunkt der erstellen des letzten Datenblocks BL1, BL2, BL3 erstellt wurden.

Die Komplexität der Blockerstellung kann dadurch erhöht werden, dass die erstellte Prüfsumme #1, #2, #3 ein vorgegebenes Format aufweisen muss. Beispielsweise wird festgelegt, dass die Prüfsumme 24 Stellen lang sein muss, wobei die ersten vier Stellen den Zahlenwert 0 aufweisen müssen. Hierfür wird neben dem Zwischenwert der Transaktionen TA und der Prüfsumme des vorherigen Datenblocks eine zu ermittelnde Zahlenfolge, als "Nonce" bezeichnet, mit einer festgelegten Länge zur Berechnung der Prüfsumme #1, #2. #3 des aktuellen Datenblocks BL1, BL2, BL3 verwendet. Die Berechnung der neuen Prüfsumme #1, #2, #3 dauert entsprechend länger, da nur wenige Noncen vorhanden sind, welche zur Berechnung einer Prüfsumme #1, #2, #3 mit den vorgegebenen Kriterien führen. Das Auffinden einer solchen geeigneten Nonce verursacht hierbei den beschriebenen zusätzlichen Zeitaufwand.

Nachdem die Prüfsumme #1, #2, #3 eines neuen Datenblocks BL1, BL2, BL3 erstellt wurde, wird der Datenblock an alle Teilnehmerknoten TK übermittelt. Die Teilnehmerknoten TK überprüfen nun die Prüfsumme #1, #2, #3 des neuen Datenblocks BL1, BL2, BL3. Erst nach erfolgreicher Validierung wird der Datenblock BL1, BL2, BL3 in allen Teilnehmerknoten TK gespeichert. Insbesondere wird hierzu eine erfolgreiche Validierung von mehr als der Hälfte aller Teilnehmerknoten TK benötigt. Ein Angreifer müsste daher zum Einschleusen/Erstellen eines fremden, schädlichen Datenblocks BL1, BL2, BL3 eine große Anzahl an Teilnehmerknoten TK manipulieren, bzw. kontrollieren, um den eingeschleusten Datenblock BL1, BL2, BL3 erfolgreich zu validieren. Bei steigender Anzahl an Teilnehmerknoten TK ist dies als so gut wie unmöglich anzusehen.

Für die Validierung eines Datenblocks BL1, BL2, BL3 ist ein wesentlich geringerer Aufwand als zur Erstellung des Datenblocks BL1, BL2, BL3 nötig. Die Prüfsumme #1, #2, #3 wird rückgerechnet, der Zwischenwert der Transaktionen TA, bzw. die Prüfsumme #1, #2, #3 des vorherigen Datenblocks BL1, BL2, BL3 zurückgewonnen und mit dem tatsächlichen Zwischenwert, bzw. mit der tatsächlichen Prüfsumme #1, #2, #3 des vorherigen Datenblock BL1, BL2, BL3 verglichen. Stimmen diese Werte überein, so ist der Datenblock BL1, BL2, BL3 erfolgreich validiert.

Im Folgenden ist beschrieben, wie mithilfe der Blockchain-Technologie Komponenteneigenschaften eines Feldgeräts F1, F2, bewerten werden können und dadurch ein Erfahrungsschatz bezüglich der Komponenteneigenschaften der Feldgeräte F1, F2 aufgebaut werden kann:

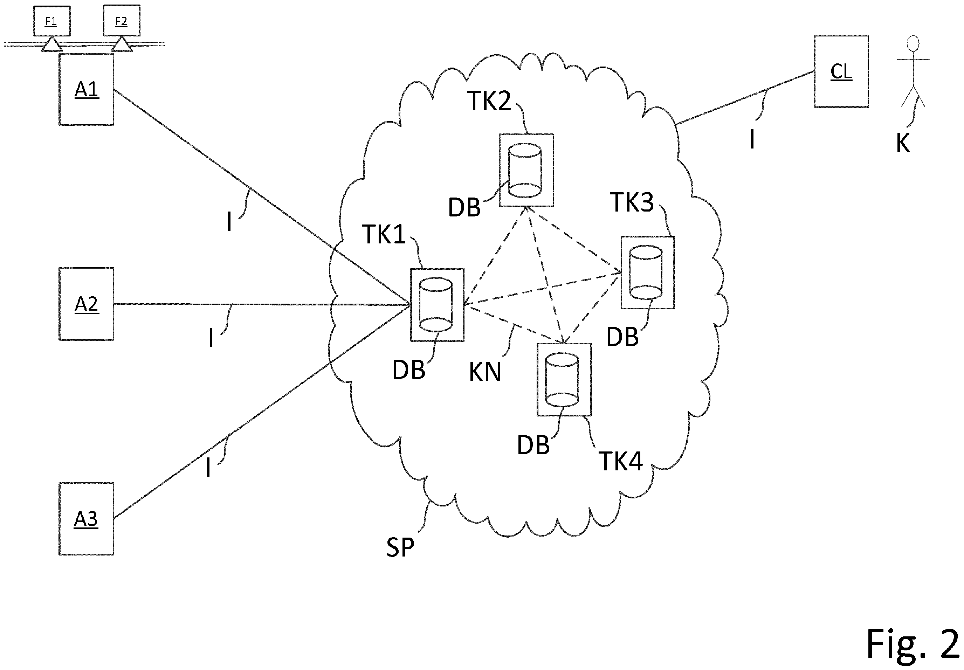

Fig. 2 zeigt eine Ausgestaltung des erfindungsgemäßen Verfahrens. Es sind mehrere Anlagen A1, A2, A3 der Prozessautomatisierung abgebildet. Jede der Anlagen A1, A2, A3 verfügt über zumindest ein Feldgerät F1, F2 (aus Übersichtlichkeitsgründen sind nur die Feldgeräte F1, F2 der Anlage A1 abgebildet). Bei den Feldgeräten F1, F2 handelt es sich beispielsweise um Druckmessgeräte, die in einem Kraftwerk mit einem hohen elektromagnetischen Rauschfaktor betrieben werden.

Aufgrund dieser Umgebungsbedingungen müssen die Feldgeräte F1, F2 einen guten EMV-Schutz aufweisen. Im Laufe der Zeit bemerkt der Anlagenbetreiber der Anlage A1, dass das Feldgerät F2 Messwerte mit Störsignalen ausgibt, die augenscheinlich durch die elektromagnetische Strahlung innerhalb der Anlage A1 verursacht werden. Das Feldgerät F1 zeigt diese Störsignale nicht. Die beiden Feldgeräte sind verschiedene Feldgerätetypen, die sich unter anderem durch das Gehäuse unterscheiden, wodurch Unterschiede in der EMV-Verträglichkeit erklärbar sind.

Bei dem Gehäuse der Feldgeräts F1 trifft daher die Komponenteneigenschaft "EMV-Schutz" zu, bei dem Gehäuse des Feldgeräts F2 hingegen nicht.

Diese Erfahrung gibt der Anlagenbetreiber der Anlage A1 als Bewertung in eine erste Service-Plattform SP ein. Dafür verbindet er sich, beispielsweise mit einem Client-PC, mit der ersten Service-Plattform SP, vorzugsweise mit einem Teilnehmerknoten TK1, TK2, TK3, TK4 der ersten Service-Plattform über das Internet I. Nach erfolgreicher Verbindung trägt der den Feldgerätetyp der Feldgeräte F1, F2, sowie das Zutreffen, bzw. Nicht-Zutreffen der Komponenteneigenschaft "EMV-Schutz" ein, verbunden mit den Daten über die Applikation der jeweiligen Feldgeräte F1, F2. Ein besonderes Merkmal der Daten über die Applikation ist in diesem Fall, dass in der Anlage A1 ein hohes Maß an elektromagnetischer Strahlung vorliegt.

Nach Erhalt der Bewertungen erstellt ein Teilnehmerknoten TK1, TK2, TK3, TK4 der Service-Plattform eine oder mehrere Transaktionen TA, die die Bewertungen verknüpft mit dem Feldgerätetyp und den jeweiligen Daten über die jeweiligen Applikationen der Feldgeräte F1, F2 enthalten. Nach Validierung der Transaktionen TA durch alle Teilnehmerknoten TK1, TK2, TK3, TK4 erfolgt, wie in Fig. 1 beschrieben, eine Blockerstellung und ggf. eine Durchführung der weiteren, in Fig. 1 beschriebenen Schritte.

Im Laufe der Zeit bildet sich durch Bewertungen weiterer Komponenteneigenschaften der Feldgeräte F1, F2, sowie der Feldgeräte aus anderen Anlagen A2, A3, ein großer Erfahrungsschatz bezüglich Komponenteneigenschaften von unterschiedlichen Feldgerätetypen.

Ein Kunde K, welcher eine Kaufentscheidung für ein neues Feldgerät für eine Applikation in seiner Anlage benötigt, verbindet sich mittels seines Client-PCs CL über das Internet I mit der ersten Service-Plattform SP. Dort wählt er seinen gewünschten Feldgerätetyp aus und erhält anschließend eine Gesamtbewertung des ausgewählten Feldgerätetyps, wobei die Gesamtbewertung sämtliche Bewertungen des Feldgerätetyps, dessen zumindest eine Komponenteneigenschaft und die Anzahl des jeweiligen Zutreffens, bzw. Nicht-Zutreffens der zumindest einen Komponenteneigenschaft enthält. Auf diese Weise ist für einen Kunden schnell ersichtlich, ob ein spezifischer Feldgerätetyp eine gewünschte Komponenteneigenschaft bietet oder nicht.

Durch Eingabe von Daten bezüglich der neuen Applikation in seiner eigenen Anlage erhält der Kunde K eine gefilterte Gesamtbewertung, die alle Feldgeräte des ausgewählten Feldgerätetyps anzeigt, bei denen die Applikationsdaten des Kunden K mit den Applikationsdaten des Anlagenbetreibers, bzw. der Anlagenbetreiber, übereinstimmen. Der Kunde erfährt auf diese Art und Weise sofort, ob ein Feldgerätetyp die gewünschten Komponenteneigenschaften für seine spezifische Applikation bietet oder nicht.

Die Anlagenbetreiber können auf Wunsch anonymisiert werden, so dass durch die eingetragenen Bewertungen kein Rückschluss auf den jeweiligen Anlagenbetreiber gezogen werden kann. Für einen Anlagenbetreiber kann dadurch die Hemmschwelle sinken, eine Komponentenbewertung abzugeben.

### Bezugszeichenliste

- A1, A2, A3: Anlage der Prozessautomatisierung
- BL1, BL2, BL3: Datenblock
- CL: Client-PC des Kunden
- DB: Datenbank
- DF: Datenfeld
- F1, F2: Feldgerät
- I: Internet
- K: Kunde
- KN: Kommunikationsnetzwerk
- SP: Service-Plattform
- TA: Transaktion
- TK1, TK2, TK3, TK4: Teilnehmerknoten
- #1, #2, #3: Hashwerte der Datenblöcke

## Patentansprüche

1. Verfahren zum manipulationssicheren Bewerten von zumindest einer Komponenteneigenschaft zumindest eines Feldgeräts (F1, F2) in einer Anlage (A1, A2, A3) der Automatisierungstechnik, umfassend:
- Erstellen einer Bewertung bezüglich der Komponenteneigenschaft des Feldgeräts (F1, F2) durch mindestens einen Anlagenbetreiber, wobei die Bewertung jeder Komponenteneigenschaft ein Zutreffen oder ein Nicht-Zutreffen zuweist; und
- Übermitteln der erstellten Bewertung an eine erste Service-Plattform (SP) und Speichern der erstellten Bewertung in der ersten Service-Plattform (SP), wobei die erste Service-Plattform (SP) dezentral mit Hilfe einer Distributed Ledger bzw. Blockchain Technologie betrieben wird und aus einer Vielzahl von Teilnehmerknoten (TK1, TK2, TK3, TK4) besteht, wobei die Teilnehmerknoten (TK1, TK2, TK3, TK4) jeweils zumindest eine Datenbank (DB) aufweisen, und
- Erstellen von Datenblöcken durch die Teilnehmerknoten (TK1, TK2, TK3, TK4), wobei ein Datenblock (BL1, BL2, BL3) zumindest eine Bewertung verknüpft mit dem Feldgerätetyp eines bewerteten Feldgeräts (F1, F2) enthält, wobei in der Vielzahl von Teilnehmerknoten (TK1, TK2, TK3, TK4) eine Vielzahl von Bewertungen unterschiedlicher Feldgeräte (F1, F2) enthalten ist.

2. Verfahren nach Anspruch 1, wobei zusätzlich die folgenden Verfahrensschritte ausgeführt werden:
- Zugreifen auf die erste Service-Plattform (SP) mittels eines Client-PCs (CL) durch einen Kunden (K);
- Auswählen eines Feldgerätetyps; und
- Erstellen und Anzeigen einer Gesamtbewertung des ausgewählten Feldgerätetyps, wobei die Gesamtbewertung sämtliche Bewertungen des Feldgerätetyps, dessen zumindest eine Komponenteneigenschaft und die Anzahl des jeweiligen Zutreffens, bzw. Nicht-Zutreffens der zumindest einen Komponenteneigenschaft enthält.

3. Verfahren nach Anspruch 2, wobei der Kunde (K) während des Auswählens des Feldgerätetyps Daten über eine Applikation eingibt, in welcher das Feldgerät (F1, F2) in einer Anlage (A1, A2, A3) installiert werden soll.

4. Verfahren nach zumindest einem der vorherigen Ansprüche, wobei der Anlagenbetreiber während des Erstellens einer Bewertung des Feldgeräts (F1, F2) Daten über eine Applikation bereitstellt, in welcher das Feldgerät (F1, F2) in einer Anlage (A1, A2, A3) installiert ist.

5. Verfahren nach Anspruch 4, wobei bei der Erstellung der Gesamtbewertung nur diejenigen Bewertungen eines Feldgerätetyps berücksichtigt werden, bei denen die Applikationsdaten des Kunden (K) mit den Applikationsdaten des Anlagenbetreibers, bzw. der Anlagenbetreiber, übereinstimmen.

6. Verfahren nach zumindest einem der vorherigen Ansprüche, wobei der Anlagenbetreiber bzw. die Anlagenbetreiber bei der Erstellung der Bewertung anonymisiert wird/werden, so dass die Bewertung keinen Rückschluss auf den/die Anlagenbetreiber zulässt.

7. Verfahren nach zumindest einem der vorherigen Ansprüche, wobei ein erstellter Datenblock (BL1, BL2, BL3) von allen Teilnehmerknoten (TK1, TK2, TK3, TK4) verifiziert wird und nur dann in der ersten Service-Plattform (SP) gespeichert wird, wenn zumindest eine vorgegebene Anzahl aller Teilnehmerknoten (TK1, TK2, TK3, TK4) den Datenblock (BL1, BL2, BL3) erfolgreich verifiziert.

8. Verfahren nach zumindest einem der vorherigen Ansprüche, wobei die erstellte Bewertung vor dem Verarbeiten in den Datenblock an alle Teilnehmerknoten (TK1, TK2, TK3, TK4) übermittelt wird und von den Teilnehmerknoten (TK1, TK2, TK3, TK4) validiert wird und wobei die erstellte Bewertung nur dann in dem Datenblock (BL1, BL2, BL3) gespeichert wird, wenn diese von zumindest einem der Teilnehmerknoten (TK1, TK2, TK3, TK4) erfolgreich validiert wird.

9. Verfahren nach zumindest einem der vorherigen Ansprüche, wobei das Feldgerät (F1, F2) als Teilnehmerknoten (TK1, TK2, TK3, TK4) in der ersten Service-Plattform (SP) integriert und zum Erstellen von Datenblöcken ausgestaltet wird.

## Claims

1. Procedure for the tamper-proof evaluation of at least one component property of at least one field device (F1, F2) in an installation (A1, A2, A3) used in automation engineering, said procedure comprising:
- Creation of an evaluation concerning the component property of the field device (F1, F2) by at least one installation operator, wherein the evaluation assigns the condition "applies" or "does not apply" to each component property; and
- Transmission of the evaluation that is created to a first service platform (SP) and storage of the implemented evaluation in the first service platform (SP), wherein the first service platform (SP) is operated decentrally with the aid of a distributed register or blockchain technology, and consists of a multitude of participant nodes (TK1, TK2, TK3, TK4), wherein the participant nodes (TK1, TK2, TK3, TK4) each have at least a database (DB), and
- Creation of data blocks by the participant nodes (TK1, TK2, TK3, TK4), wherein a data block (BL1, BL2, BL3) contains at least one evaluation linked with the field device type of an evaluated field device (F1, F2), wherein a multitude of evaluations of different field devices (F1, F2) are contained in the multitude of participant nodes (TK1, TK2, TK3, TK4).

2. Procedure as claimed in Claim 1, wherein the following process steps are additionally carried out:
- Access to the first service platform (SP) by a client (K) using a client PC (CL);
- Selection of a field device type; and
- Creation and display of an overall evaluation of the selected field device type, wherein the overall evaluation contains all the evaluations of the field device type, its at least one component property, and the number of times the at least one component property "applies" or "does not apply".

3. Procedure as claimed in Claim 2, wherein, while the field device type is being selected, the client (K) enters data via an application in which the field device (F1, F2) is to be installed in an installation (A1, A2, A3).

4. Procedure as claimed in at least one of the previous claims, wherein, while an evaluation of the field device (F1, F2) is being created, the installation operator provides data via an application in which the field device (F1, F2) is installed in an installation (A1, A2, A3).

5. Procedure as claimed in Claim 4, wherein, during the creation of the overall evaluation, consideration is only given to the evaluations of a field device type where the application data of the client (K) match the application data of the installation operator.

6. Procedure as claimed in at least one of the previous claims, wherein the installation operator(s) is/are anonymized during the creation of the evaluation so it is not possible to identify the installation operator(s) from the evaluation.

7. Procedure as claimed in at least one of the previous claims, wherein a data block (BL1, BL2, BL3) that is created is verified by all the participant nodes (TK1, TK2, TK3, TK4) and is only saved in the first service platform (SP) if at least a predefined number of all the participant nodes (TK1, TK2, TK3, TK4) successfully verify the data block (BL1, BL2, BL3).

8. Procedure as claimed in at least one of the previous claims, wherein the evaluation that is created is transmitted to all the participant nodes (TK1, TK2, TK3, TK4) before being processed in the data block and is validated by the participant nodes (TK1, TK2, TK3, TK4), and wherein the evaluation that is created is only saved in the data block (BL1, BL2, BL3) if the evaluation is successfully validated by at least one of the participant nodes (TK1, TK2, TK3, TK4).

9. Procedure as claimed in at least one of the previous claims, wherein the field device (F1, F2) is integrated as participant nodes (TK1, TK2, TK3, TK4) in the first service platform (SP) and is designed for the creation of data blocks.

## Revendications

1. Procédé destiné à l'évaluation protégée contre les manipulations d'au moins une propriété de composants d'un appareil de terrain (F1, F2) dans une installation (A1, A2, A3) de la technique d'automatisation, lequel procédé comprend :
- Réalisation d'une évaluation concernant la propriété de composants de l'appareil de terrain (F1, F2) par au moins un exploitant d'installations, l'évaluation de chaque propriété de composant attribuant un état pertinent ou non pertinent ; et
- Transmission de l'évaluation réalisée à une première plateforme de service (SP) et mémorisation de l'évaluation réalisée dans la première plateforme de service (SP),
la première plateforme de service (SP) étant utilisée de façon décentralisée à l'aide d'un registre distribué ou d'une technologie Blockchain, et constituée d'une pluralité de nœuds d'utilisateurs (TK1, TK2, TK3, TK4), les nœuds d'utilisateurs (TK1, TK2, TK3, TK4) présentant chacun au moins une base de données (DB), et
- Création de blocs de données par les nœuds d'utilisateurs (TK1, TK2, TK3, TK4), un bloc de données (BL1, BL2, BL3) associant au moins une évaluation avec le type d'un appareil de terrain (F1, F2) évalué, une pluralité d'évaluations de différents appareils de terrain (F1, F2) étant contenue dans la pluralité de nœuds d'utilisateurs (TK1, TK2, TK3, TK4).

2. Procédé selon la revendication 1, pour lequel les étapes de procédé supplémentaires sont exécutées :
- Accès à la première plate-forme de service (SP) au moyen d'un PC client (CL) par un client (K) ;
- Sélection d'un type d'appareil de terrain ; et
- Réalisation et affichage d'une évaluation globale du type d'appareil de terrain sélectionné, l'évaluation globale contenant l'ensemble des évaluations du type d'appareil de terrain, dont l'au moins une propriété de composant et le nombre d'états pertinents ou non pertinents de l'au moins une propriété de composant.

3. Procédé selon la revendication 2, pour lequel le client (K) entre, pendant la sélection du type d'appareil de terrain, des données via une application dans laquelle l'appareil de terrain (F1, F2) doit être installé au sein d'une installation (A1, A2, A3).

4. Procédé selon au moins l'une des revendications précédentes, pour lequel l'exploitant de l'installation met à disposition, pendant la réalisation d'une évaluation de l'appareil de terrain (F1, F2), des données via une application, dans laquelle l'appareil de terrain (F1, F2) doit être installé au sein d'une installation (A1, A2, A3).

5. Procédé selon la revendication 4, pour lequel, lors de la réalisation de l'évaluation globale, seules sont prises en compte les évaluations d'un type d'appareil de terrain, pour lesquelles les données d'application du client (K) concordent avec les données d'application de l'exploitant de l'installation ou des exploitants d'installations.

6. Procédé selon au moins l'une des revendications précédentes, pour lequel l'exploitant de l'installation ou les exploitants d'installations est/sont anonymisé(s) lors de la réalisation de l'évaluation, si bien que l'évaluation ne permet pas d'identifier le ou les exploitants d'installations.

7. Procédé selon au moins l'une des revendications précédentes, pour lequel un bloc de données (BL1, BL2, BL3) créé est vérifié par tous les nœuds d'utilisateurs (TK1, TK2, TK3, TK4) et n'est enregistré dans la première plateforme de service (SP) que lorsqu'au moins un nombre prédéfini de l'ensemble des nœuds d'utilisateurs (TK1, TK2, TK3, TK4) a vérifié avec succès le bloc de données (BL1, BL2, BL3).

8. Procédé selon au moins l'une des revendications précédentes, pour lequel l'évaluation réalisée est transmise à tous les nœuds d'utilisateurs (TK1, TK2, TK3, TK4) avant le traitement dans le bloc de données et validée par les nœuds d'utilisateurs (TK1, TK2, TK3, TK4), et l'évaluation réalisée n'étant mémorisée dans le bloc de donnée (BL1, BL2, BL3) que lorsque celle-ci est validée avec succès par au moins l'un des nœuds d'utilisateurs (TK1, TK2, TK3, TK4).

9. Procédé selon au moins l'une des revendications précédentes, pour lequel l'appareil de terrain (F1, F2) est intégré en tant que nœuds d'utilisateurs (TK1, TK2, TK3, TK4) dans la première plateforme de service (SP) et est conçu pour la création de blocs de données.
